# EUROPEAN PATENT APPLICATION

(11) **EP 1 686 395 A1**
(43) Date of publication of application: **02.08.2006**
(21) Application number: 06250198.6
(22) Date of filing: 16.01.2006
(51) Int. Cl.: G01S 17/10

(54) **Laser rangefinder**

(30) Priority: 30.01.2005 IL 166575
(71) Applicant: Rafael-Armament Development Authority Ltd., 31021 Haifa (IL)
(72) Inventor: Avormad, Shimon, Nahariya 22292 (IL); Langer, Thomas, Kfar Vradim 25147 (IL); Chishinsky, Ehud, Nofit 36001 (IL)
(74) Representative: Cooper-Rolfe, Elizabeth Louise

(57) **Abstract**

A range finder system for determining a range of an object. The system includes a source of laser radiation configured for transmitting a plurality of pulses, a first detector, a second detector, an optical arrangement configured for directing the pulses along an outgoing path and receiving the pulses reflected by the object along a return path. The first detector is deployed to be responsive to the pulses traveling along the outgoing path and the second detector insensitive to the reflections of the pulses from less that the minimum range. The system further includes a controller configured for shorting a connection within the second detector to make the second detector insensitive to the reflections of the pulses from less than a minimum range, and for determining the range of the object based upon a time-of-flight of one or more of the pulses based upon output signals of the first detector and the second detector.

## Description

The present invention relates to rangefinders and, in particular, it concerns rangefinders for use in a guided missile.

By way of introduction, rangefinders are typically installed behind a window of a missile seeker head. The window is generally formed from a heat resistant material such as sapphire. Additionally, it is advantageous for the laser and detector of the range finder to share the same optical channel in order to make the rangefinder compact. However, up to 10% of the outgoing laser pulses are reflected back by the seeker head window to the detector. These reflections can destroy the detector or at the very least saturate the sensor.

Additionally, back-scattering from atmospheric aerosols can saturate the sensor and/or distort the range computations of the rangefinder.

There is therefore a need for an accurate rangefinder which prevents the detector from being saturated or destroyed by reflections from the missile window or aerosols.

The present invention is a rangefinder construction and method of operation thereof.

According to an embodiment of the present invention there is provided a range finder system for determining a range of an object, comprising: (a) a source of laser radiation configured for transmitting a plurality of pulses; (b) a first detector; (c) a second detector; (d) an optical arrangement configured for directing the pulses along an outgoing path and receiving the pulses reflected by the object along a return path, wherein: (i) the first detector is deployed to be responsive to the pulses traveling along the outgoing path; and (ii) the second detector is deployed to detect the pulses traveling along the return path; and (e) a controller configured for: (i) shorting a connection within the second detector so as to render the second detector insensitive to the reflections of the pulses from less than a minimum range; and (ii) determining the range of the object based upon a time-of-flight of at least one of the pulses based upon output signals of the first detector and the second detector.

In accordance with an additional preferred feature of the present invention, the controller is configured for shorting the connection within the second detector for at least 20 nanoseconds.

In accordance with an additional preferred feature of the present invention, there is also provided a shared electronic channel having a channel input and a channel output, the shared electronic channel being configured for amplifying signals, wherein the first detector has a first detector output operationally connected to the channel input and the second detector has a second detector output operationally connected to the channel input, wherein the controller is operationally connected to the channel output.

In accordance with an additional preferred feature of the present invention, the shared electronic channel is also configured for filtering signals.

In accordance with an additional preferred feature of the present invention, there is also provided a switch having a first switch input, a second switch input and a switch output, the first switch input being electrically connected to the switch output in a first operative position of the switch, the second switch input being electrically connected to the switch output in a second operative position of the switch, the first detector output being electrically connected to the first switch input, the second detector output being electrically connected to the second switch input, the switch output being electrically connected to the channel input.

In accordance with another embodiment of the present invention, there is a range finder system for determining a range of an object, comprising: (a) a source of laser radiation configured for transmitting a plurality of pulses; (b) a first detector; (c) a second detector; (d) an optical arrangement configured for directing the pulses along an outgoing path and receiving the pulses reflected by the object along a return path, wherein: (i) the first detector is deployed to be responsive to the pulses traveling along the outgoing path; and (ii) the second detector is deployed to detect the pulses traveling along the return path; (e) a shared electronic channel having a channel input and a channel output, the shared electronic channel being configured for amplifying signals, wherein the first detector has a first detector output operationally connected to the channel input and the second detector has a second detector output operationally connected to the channel input; and (f) a controller operationally connected to the channel output, the controller being configured for determining the range of the object based upon a time-of-flight of at least one of the pulses based upon output signals of the first detector and the second detector.

In accordance with an additional preferred feature of the present invention, the shared electronic channel is also configured for filtering signals.

In accordance with an additional preferred feature of the present invention, there is also provided a switch having a first switch input, a second switch input and a switch output, the first switch input being electrically connected to the switch output in a first operative position of the switch, the second switch input being electrically connected to the switch output in a second operative position of the switch, the first detector output being electrically connected to the first switch input, the second detector output being electrically connected to the second switch input, the switch output being electrically connected to the channel input.

In accordance with an additional preferred feature of the present invention, the controller is further configured for shorting a connection within the second detector so as to render the second detector insensitive to the reflections of the pulses from less than a minimum range.

In accordance with an additional preferred feature of the present invention, the controller is configured for shorting the connection within the second detector for at least 20 nanoseconds.

In accordance with an additional preferred feature of the present invention, the switch is set to the first operative position prior to the source of laser radiation transmitting each of the pulses, the switch being set to the second operative position after the first detector detects each of the pulses.

For a better understanding of the present invention, and to show how the same may be carried into effect, reference will now be made, by way of example to the accompanying drawings in which:
Fig. 1 is schematic view of a rangefinder system that is constructed and operable in accordance with a preferred embodiment of the invention;
Fig. 2 is a schematic view of the electronics of the system of Fig. 1;
Fig. 3 is a flow chart showing the steps of operation of the system of Fig. 1; and
Fig. 4 is a graph showing the signal timing of the system of Fig. 1.

The present invention relates generally to a rangefinder construction and method of operation thereof.

The principles and operation of a rangefinder embodying the present invention may be better understood with reference to the drawings and the accompanying description.

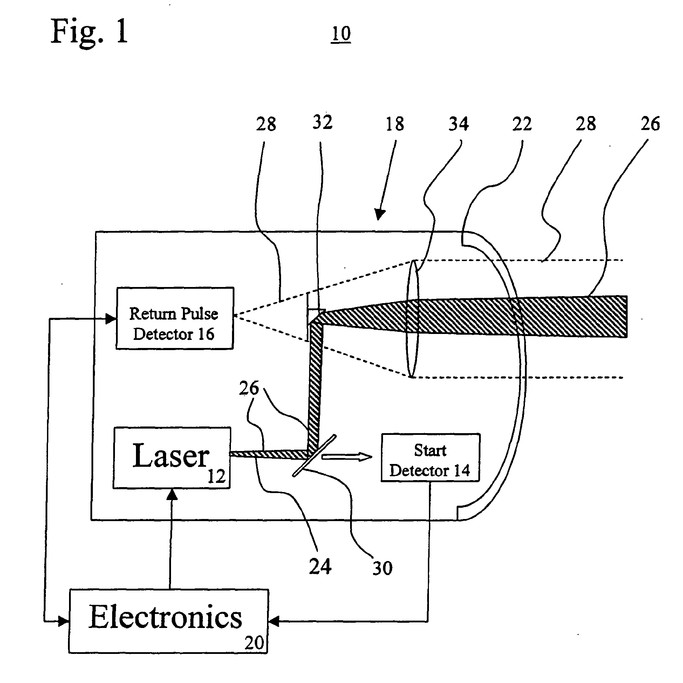

Reference is now made to Fig. 1, which is schematic view of a rangefinder system **10** for determining a range of an object (not shown) that is constructed and operable in accordance with a preferred embodiment of the invention. Rangefinder system **10** includes a source of laser radiation **12,** a start detector **14,** a return pulse detector **16,** an optical arrangement **18,** an electronic arrangement **20** and a window **22.** Source of laser radiation **12** is typically configured for transmitting a plurality of pulses **24** of near-infrared laser radiation. Source of laser radiation **12** is defined herein to include a laser for producing pulses from in the range from visible light to infrared. Start detector **14** is typically a PIN photodiode. Return pulse detector **16** is typically an Avalanche Photodiode (APD).

Optical arrangement **18** is configured for directing pulses **24** along an outgoing path **26** and receiving pulses **24** reflected by the object along a return path **28.** Optical arrangement **18** includes a partially-transparent mirror **30,** a reflecting element **32** and a lens system **34.** Lens system **34** is shown in Fig. 1 as a single lens. However, lens system **34** is typically a plurality of lenses. Partially-transparent mirror **30** is disposed in outgoing path **26** so that a majority of each pulse **24** is deflected by 90 degrees. A remaining portion of each pulse **24,** not deflected by partially-transparent mirror **30,** is transmitted through partially-transparent mirror **30** towards start detector **14.** Therefore, start detector **14** is deployed to be responsive to pulses **24** travelling along outgoing path **26.** The term "to be responsive" is defined herein to exclude detecting pulses **24** which have already exited rangefinder system **10** via window **22,** but to include detecting reflections from partially reflecting optical components within rangefinder system **10** or transmission through such components within rangefinder system **10.** Reflecting element **32** is disposed in return path **28** so that pulses **24** deflected by partially-transparent mirror **30** are deflected by reflecting element **32** through lens system **34** and out of rangefinder system **10** via window **22.** Lens system **34** is disposed in both outgoing path **26** and return path **28** for diverging or converging pulses **24** of outgoing path **26** and return path **28,** respectively.

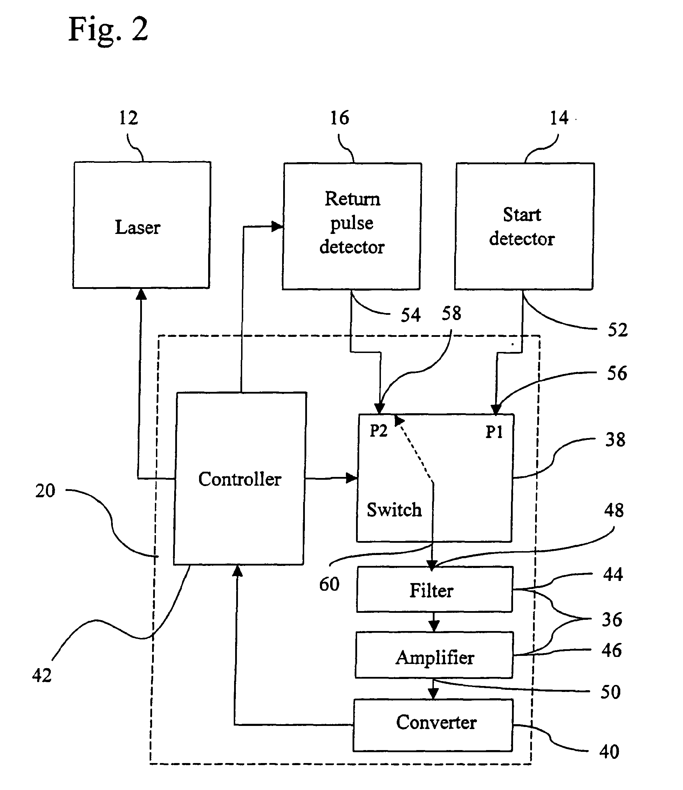

A part of each pulse **24** is reflected by window **22** back along return **path 28** toward return pulse detector **16.** This "back reflection" off of window **22,** which can be up to 10% of the incident radiation, can be very problematic, potentially destroying, or at the very least saturating, return pulse detector **16.** To overcome the problem of the "back reflection", the present invention teaches rendering return pulse detector **16** insensitive to this "back reflection", as will be described below with reference to Fig. 2.

Pulses **24** that are transmitted by window **22** continue to the object. Pulses **24** are reflected by the object back to rangefinder system **10** along return path **28** via window **22** and lens system **34.** Return pulse detector **16** is deployed to receive and detect pulses **24** traveling along return path **28.** It is seen that optical arrangement **18** defines a partially shared optical channel, shared by outgoing path **26** and return path **28** between reflecting element **32** and window **22.**

Reflecting element **32** which is disposed in return path **28** is small enough so as not to disrupt too many pulses **24** travelling along return path **28.**

Electronic arrangement **20** is configured for driving source of laser radiation **12** and processing signals from start detector **14** and return pulse detector **16.** Electronic arrangement **20** is described in more detail with reference to Fig. 2, below.

Reference is now made to Fig. 2, which is a schematic view of electronic arrangement **20** of rangefinder system **10** of Fig. 1. Electronic arrangement **20** includes a shared electronic channel **36,** a switch **38,** a converter **40** and a controller **42.**

Shared electronic channel **36** includes a filter **44** for filtering signals and an amplifier **46** for amplifying the filtered signals. Filter **44** is typically a 5 pole filter of 20MHz per pole. Amplifier **46** is typically a variable gain digital amplifier. The gain of amplifier **46** is increased as a function of time after each pulse is transmitted by source of laser radiation **12.** This is because the returned pulse intensity falls according to the inverse square of the distance to the reflecting object and it is preferable to maintain the amplified pulse amplitude in the optimal range for subsequent processing. In other words, if the output voltage of amplifier **46** has a range from 0 to 10 volts and you want to keep the pulse peak in the range of 4 to 8 volts to avoid reaching saturation, you need the amplification to be 4 times greater at 200 meters than for 100 meters because the distance has doubled and the received signal power has fallen off to 25%.

Shared electronic channel **36** is described as "shared" in that the same electronic components are used for filtering and amplifying the output signals of start detector **14** and return pulse detector **16.** In other words, shared electronic channel **36** is a single electronic channel for filtering and amplifying output signals of start detector **14** and return pulse detector **16.** Using a single channel increases the accuracy of the determination of the range of the object, as will be explained below. If two separate electronic channels are used, one for start detector **14** and one for return pulse detector **16,** differences between the calibration and performance of each channel would create errors in the final calculated range of the object. This is mainly due to manufacturing differences and temperature differentials between the two channels. Therefore, by using a single electronic channel errors created by differences between channels do not exist and therefore the calculation of the range of the object is more accurate. Shared electronic channel **36** has a channel input **48** and a channel output **50.** Start detector **14** has an output **52.** Return pulse detector 16 has an output **54.** Output **52** and output **54** are operationally connected to channel input **48.** The term "operationally connected" is defined herein to include connection via a temporary connection such as switch **38.**

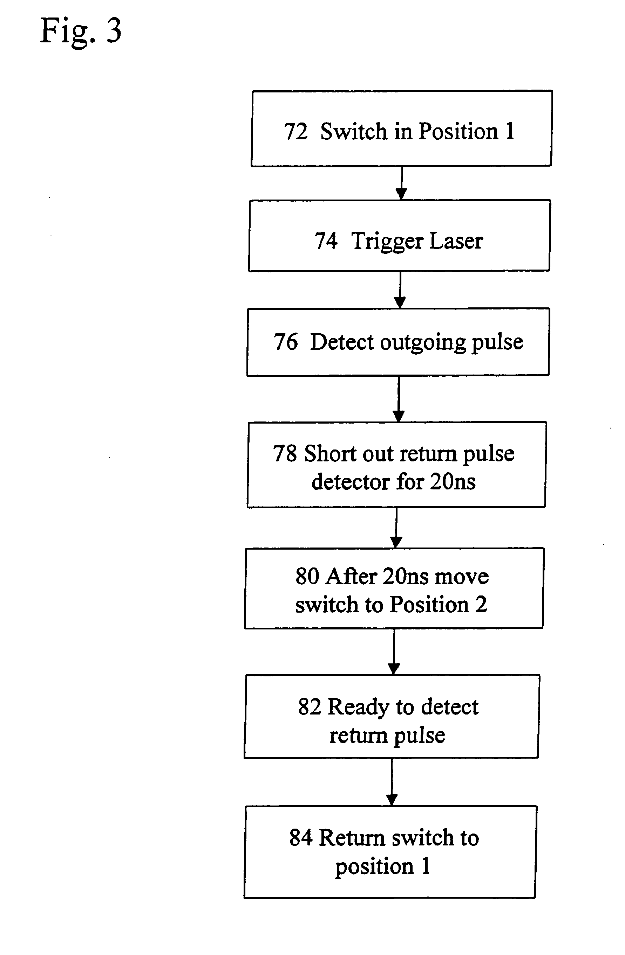

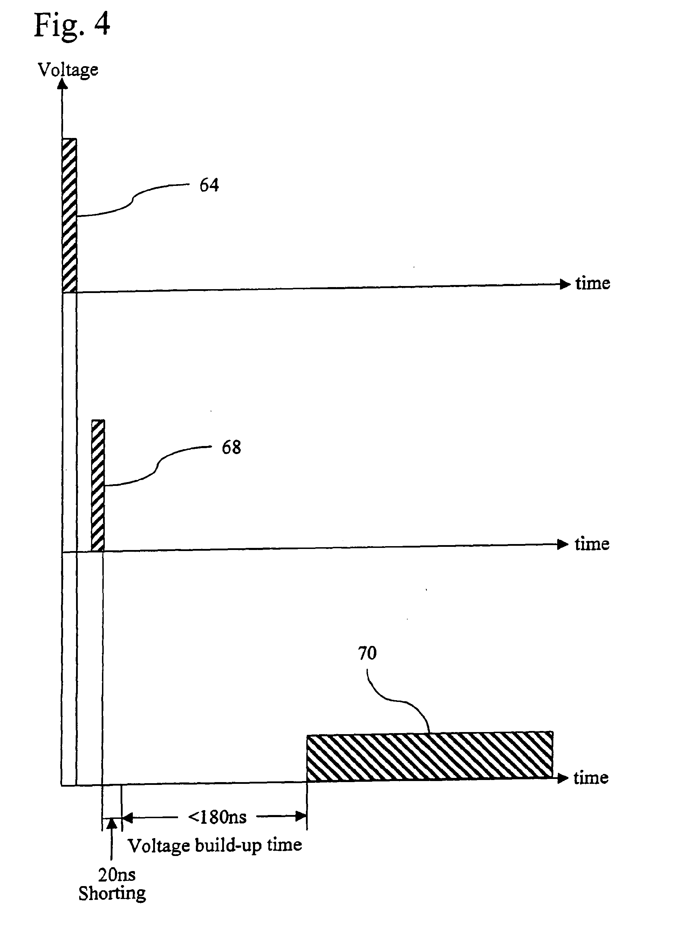

Switch **38** is an electronic switch controller by controller **42.** The switching of switch **38** by controller **42** is described in more detail with reference to Figs. 3 and 4. Switch **38** has a switch input **56,** a switch input **58** and a switch output **60.** Switch input **56** is electrically connected to switch output **60** in a first operative position, *P1,* of switch **38.** Switch input **58** is electrically connected to switch output **60** in a second operative position, *P2,* of switch **38.** As switch **38** is an electronic switch without moving parts, the term "electronically connected to switch output" is defined herein as allowing electrical current flow between the switch output and the operative switch input. Output **52** of start detector **14** is electrically connected to switch input **56** and output **54** of return pulse detector **16** is electrically connected to switch input **58.** Therefore, switch **38** selectively routes the output signals of start detector **14** and return pulse detector **16** to channel input **48.**

Converter **40** is operationally connected to channel output **50**. Converter **40** receives the filtered and amplified outputs of start detector **14** and return pulse detector **16.** Converter is configured for converting the output of amplifier **46** from an analogue signal to a digital signal.

Controller **42** is operationally connected to converter **40,** switch **38,** source of laser radiation **12** and return pulse detector **16.** Controller **42** is configured for determining the range of the object based upon a time-of-flight of pulses **24** based upon output signals of start detector **14** and return pulse detector **16.** Controller **42** knows whether the pulse it receives is from start detector **14** or return pulse detector **16** based upon the operative position of switch **38.** Pulses **24** are distinguished from noise by defining a pulse as having an amplitude above a given threshold value.

Reference is now made to Figs. 3 and 4. Fig. 3 is a flow chart showing the steps of operation of rangefinder system **10** of Fig. 1. Fig. 4 is a graph showing the signal timing of rangefinder system **10** of Fig. 1. When controller **42** determines that an output signal, associated with a returning pulse travelling along return path **28,** drops below a predetermined value (in other words, the effective end of the pulse is detected) controller **42** performs two tasks. First, controller **42** switches switch **38** to operative position *P1* (block **72),** in preparation for shared electronic channel **36** to process an output signal **68** of start detector **14** in relation to detection of a new pulse transmitted by source of laser radiation **12.** Second, after switch **38** is switched to operative position *P1*, controller **42** sends a trigger signal **64** to source of laser radiation **12** for triggering transmission of the new pulse (block **74).** There is a short delay before source of laser radiation **12** produces the new pulse. This delay depends on the type of laser and other factors, such as the temperature of the laser.

Start detector **14** detects the new pulse as the new pulse travels along outgoing path **26** (block **76).** When the beginning of the new pulse is detected by start detector **14,** controller **42** renders return pulse detector **16** insensitive to reflections of the new pulse from less than a minimum range, by shorting a connection within return pulse detector **16.** The term "less than a minimum range" is defined to include the possibility of excluding even reflections from outside rangefinder system **10,** for example, but not limited to reflections from atmospheric aerosol. However, the "minimum range" can be chosen to exclude only reflections from window **22** inwards. Return pulse detector **16** is rendered insensitive to radiation almost immediately upon shorting. The shorting is performed for at least 20 nanoseconds, which corresponds to a distance traveled by the new pulse of approximately 6 meters (block **78).** The shorting time is dependent upon the optical path from source of laser radiation **12** to window **22** and back to return pulse detector **16** taking into account the duration of the pulses. The shorting out can be longer to take into account reflection from atmospheric aerosol external to rangefinder system **10.**

After the 20 nanosecond shorting period, controller **42** removes the shorting of return pulse detector **16** and switches switch **38** to operative position *P2* (block **80),** in preparation for shared electronic channel **36** to process an output signal **70** of return pulse detector **16** in relation to the new pulse returning along return path **28.** After the shorting is removed, it takes between 150 nanoseconds and 180 nanoseconds for the voltage to build up across the return pulse detector **16** in order for return pulse detector **16** to start sensing (block **82).**

When controller **42** determines that output signal **70** drops below a predetermined value or there has an elapse of time greater than a predetermined value, controller **42** then switches switch **38** to operative position *P1* (block **84)** and then triggers source of laser radiation **12** to fire another new pulse.

It will be appreciated by persons skilled in the art that the present invention is not limited to what has been particularly shown and described hereinabove. Rather, the scope of the present invention includes both combinations and sub-combinations of the various features described hereinabove, as well as variations and modifications thereof that are not in the prior art which would occur to persons skilled in the art upon reading the foregoing description.

## Claims

1. A range finder system for determining a range of an object, comprising:
(a) a source of laser radiation configured for transmitting a plurality of pulses;
(b) a first detector;
(c) a second detector;
(d) an optical arrangement configured for directing said pulses along an outgoing path and receiving said pulses reflected by the object along a return path, wherein:
(i) said first detector is deployed to be responsive to said pulses traveling along said outgoing path; and
(ii) said second detector is deployed to detect said pulses traveling along said return path; and
(e) a controller configured for:
(i) shorting a connection within said second detector so as to render said second detector insensitive to said reflections of said pulses from less than a minimum range; and
(ii) determining the range of the object based upon a time-of-flight of at least one of said pulses based upon output signals of said first detector and said second detector.

2. The system of claim 1, wherein said controller is configured for shorting said connection within said second detector for at least 20 nanoseconds.

3. The system of claim 1 or 2, further comprising a shared electronic channel having a channel input and a channel output, said shared electronic channel being configured for amplifying signals, wherein said first detector has a first detector output operationally connected to said channel input and said second detector has a second detector output operationally connected to said channel input, wherein said controller is operationally connected to said channel output.

4. The system of claim 3, wherein said shared electronic channel is also configured for filtering signals.

5. The system of claim 3 or 4, further comprising a switch having a first switch input, a second switch input and a switch output, said first switch input being electrically connected to said switch output in a first operative position of said switch, said second switch input being electrically connected to said switch output in a second operative position of said switch, said first detector output being electrically connected to said first switch input, said second detector output being electrically connected to said second switch input, said switch output being electrically connected to said channel input.

6. A range finder system for determining a range of an object, comprising:
(a) a source of laser radiation configured for transmitting a plurality of pulses;
(b) a first detector;
(c) a second detector;
(d) an optical arrangement configured for directing said pulses along an outgoing path and receiving said pulses reflected by the object along a return path, wherein:
(i) said first detector is deployed to be responsive to said pulses traveling along said outgoing path; and
(ii) said second detector is deployed to detect said pulses traveling along said return path;
(e) a shared electronic channel having a channel input and a channel output, said shared electronic channel being configured for amplifying signals, wherein said first detector has a first detector output operationally connected to said channel input and said second detector has a second detector output operationally connected to said channel input; and
(f) a controller operationally connected to said channel output, said controller being configured for determining the range of the object based upon a time-of-flight of at least one of said pulses based upon output signals of said first detector and said second detector.

7. The system of claim 6, wherein said shared electronic channel is also configured for filtering signals.

8. The system of claim 6 or 7, further comprising a switch having a first switch input, a second switch input and a switch output, said first switch input being electrically connected to said switch output in a first operative position of said switch, said second switch input being electrically connected to said switch output in a second operative position of said switch, said first detector output being electrically connected to said first switch input, said second detector output being electrically connected to said second switch input, said switch output being electrically connected to said channel input.

9. The system of claim 8, wherein said controller is further configured for shorting a connection within said second detector so as to render said second detector insensitive to said reflections of said pulses from less than a minimum range.

10. The system of claim 9, wherein said controller is configured for shorting said connection within said second detector for at least 20 nanoseconds.

11. The system of claim 9, wherein said switch is set to said first operative position prior to said source of laser radiation transmitting each of said pulses, said switch being set to said second operative position after said first detector detects each of said pulses.
